(19) Europäisches Patentamt
European Patent Office
Office européen des brevets

(11) **EP 1 374 435 B1**

(12) **EUROPEAN PATENT SPECIFICATION**

(45) Date of publication and mention
of the grant of the patent:
**22.10.2008 Bulletin 2008/43**

(51) Int Cl.:
***H04B 1/707*** (2006.01)

(21) Application number: **02720140.9**

(22) Date of filing: **28.03.2002**

(86) International application number:
**PCT/GB2002/001506**

(87) International publication number:
**WO 2002/082675 (17.10.2002 Gazette 2002/42)**

(54) **APPARATUS FOR AND A METHOD OF PROVIDING A WEIGHTING FACTOR**

VORRICHTUNG UND VERFAHREN ZUR BEREITSTELLUNG GEWICHTUNGSFAKTOREN

DISPOSITIF ET PROCEDE POUR L'ETABLISSEMENT D'UN FACTEUR DE PONDERATION

(84) Designated Contracting States:
**AT BE CH CY DE DK ES FI FR GB GR IE IT LI LU MC NL PT SE TR**

(30) Priority: **03.04.2001 GB 0108348**

(43) Date of publication of application:
**02.01.2004 Bulletin 2004/01**

(73) Proprietor: **UbiNetics (VPT) Limited**
**Melbourn**
**Hertfordshire SG8 6DP (GB)**

(72) Inventors:
• **PRASETYO, Bhimantoro, Y.**
**Cambridge CB1 9YW (GB)**

• **GIANCOLA, Diego**
**Cambridge CB1 2AQ (GB)**
• **WRIGHT, David**
**Bury St. Edmunds,**
**Suffolk ID28 6SG (GB)**

(74) Representative: **Pratt, David Martin et al**
**Withers & Rogers LLP**
**Goldings House**
**2 Hays Lane**
**London SE1 2HW (GB)**

(56) References cited:
**EP-A- 0 893 888     US-A- 5 812 542**

**Description**

This invention relates to apparatus for providing a weighting factor for weighting a signal provided by a given finger of a Rake receiver. The invention relates also to a method of providing a weighting factor for a given finger of a Rake receiver. The invention relates also to a Rake receiver and to a method of operating a Rake receiver.

A rake receiver comprises a plurality of fingers each of which processes a different component of a received signal by multiplying it with a different phase of a de-spreading code. The resulting signals are adjusted in phase and in amplitude before being combined. It is usual to adjust the amplitude of each of the signals provided by the fingers on the basis a weighting signal which is calculated from the signal-to-interference ratio (SIR), which is measured for each finger. However, SIR measurement is costly in terms of hardware and/or processing resources.

Known Rake receivers are described in EP-A-0 893 888 and US-A-5 812 542.

It is an aim of the invention to reduce the amount of hardware and/or processing resources required to provide weighting signals.

In accordance with a first aspect of the invention, there is provided apparatus for providing a weighting factor for weighting a signal provided by a given finger of a Rake receiver, the apparatus comprising:

means for measuring the power of signals provided by each of a plurality of fingers of the Rake receiver;
means for summing the measured power on fingers other than the given finger, to provide an estimate of the interference on the given finger; and
means for calculating the weighting factor for the given finger from the estimated interference, characterised in that the calculating means includes means for calculating the weighting factor with a contribution from the estimated interference on the given finger and a contribution from the sum of the interference estimates of all the fingers divided by the number of fingers.

In accordance with a second aspect of the invention, there is provided a Rake receiver comprising this apparatus and means for scaling the signal provided by the given finger.

In accordance with a third aspect of the invention, there is provided a method of providing a weighting factor for a given finger of a Rake receiver, the method comprising:

measuring the power of signals on a plurality of fingers;
summing the measured powers on fingers other than the given finger, to estimate the interference on the given finger; and
calculating a weighting factor for the given finger from the estimated interference, characterised in that the weighting factors is calculated with a contribution from the estimated interference on the given finger and a contribution from the average interference (as hereinbefore defined) on the fingers.

The invention allows weighting signals to be provided without the use of SIR measurement hardware and/or software routines.

Embodiments of the present invention will now be described, by way of example only, with reference to the accompanying drawings, of which:-

Figure 1 is a schematic diagram of apparatus according to a first embodiment of the present invention; and

Figure 2 is a schematic diagram of apparatus according to a second embodiment of the invention.

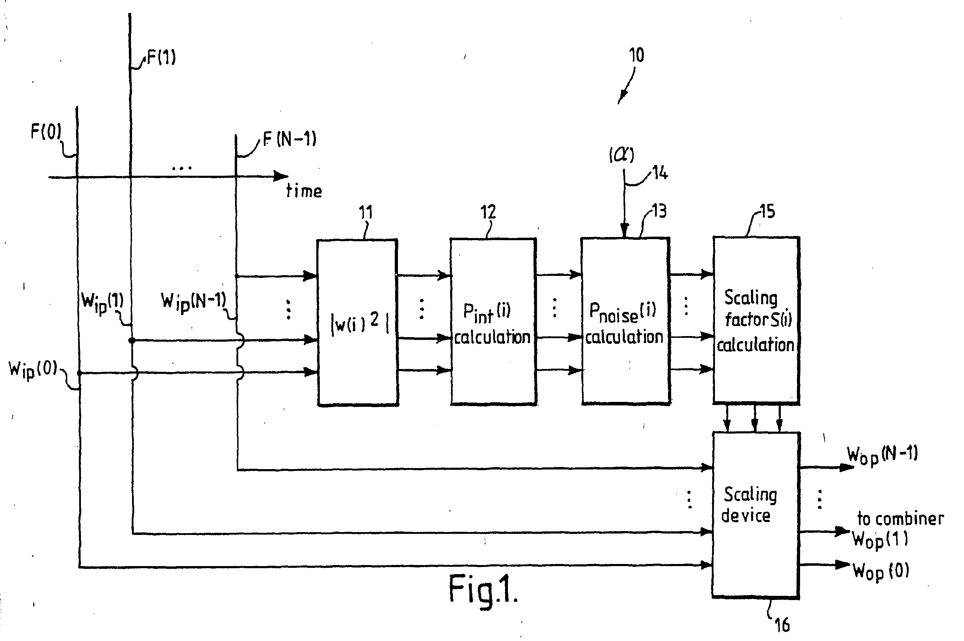

Figure 1 shows apparatus 10 forming part of a Rake receiver constructed in accordance with the invention. The apparatus 10 receives input signals $W_{ip}(0)$ to $W_{ip}(N-1)$ from N fingers on respective signal paths corresponding to different phases of a de-spreading code, the input signals having amplitudes and phases which are independent of each other. The amplitudes of the input signals are indicated schematically at $F(0)$ to $F(N-1)$, and it is usual for the signals to vary in amplitude, phase and code space as the Rake receiver moves relative to the transmitter from which it receives signals.

The inputs $W_{ip}(0)$ to $W_{ip}(N-1)$ are provided to a power calculation device 11, which measures, in a conventional manner, the power of each of the input signals. N power measurements, each corresponding to a respective one of the input signals $W_{ip}(0)$ to $W_{ip}(N-1)$, are provided to an interference estimation device 12. The interference on a given finger is estimated by the interference estimation device 12 to be the sum of the powers calculated for all of the fingers other than the given finger. This calculation is performed for each of the fingers, and N interference estimates are then provided to a noise power calculation device 13.

The interference power on a finger can be estimated in this manner since the average amount of interference on a finger is proportional to the power on the remaining fingers divided by the spreading factor (SF) of the de-spreading code. For the proposed universal mobile telephone system (UMTS), downlink transmissions (Node B to user equipment (UE)) will use an orthogonal variable spreading factor (OVSF) code - OVSF codes have special cross-correlation properties when correctly synchronised at the Node B. Data will be transmitted at the rate of one data bit for every repeat of the OVSF code. The chip rate of the OVSF code will be fixed, but the length of the code, which equates to the SF, will be variable to allow variable data rates. This embodiment forms part of a Rake receiver in a UE for use in UMTS.

The noise power calculation device 13 calculates the noise power on each of the fingers using the following equation:

$$P_{noise}(i) = (1.024 \text{-} \alpha)\, P_{int}(i) + \alpha E\, \{P_{int}\}$$

Where $P_{int}(i)$ is the interference estimate for the finger, $E\{P_{int}\}$ is the average interference on the fingers, and $\alpha$ is a control parameter having a value between 0 and 1.024 and being $10^{-3} \times 2^n$. The noise power so calculated is provided as a weighting factor to a scaling factor calculation device 15. It will be appreciated that when $\alpha = 0$, the calculated noise power for a given finger is proportional to the estimated interference on that finger. When $\alpha = 1.024$, the calculated noise power for a given finger is proportional to the average interference on the fingers. The average interference is defined as the sum of the interference estimates divided by N. When $\alpha$ is between 0 and 1.024, the calculated noise power for a given finger includes a contribution from the estimated interference for that finger and a contribution from the average interference on the fingers. It will be appreciated that $\alpha = 1.024$ gives a maximal ratio combining (MRC) result, and $\alpha=0$ gives a result which can be considered to result from an approximate whitened matched filter (WMF). $\alpha=0.512$ gives a balanced result having an equal contribution from MRC and WMF.

A weighting factor for each finger is received by the scaling factor calculation device 15, which calculates a scaling factor s(i) for each finger according to the formula:

$$s(i) = \frac{P_{noise\,\min}}{P_{noise(i)}}$$

Where $P_{noise}(i)$ is the weighting factor for the given finger and $P_{noise}$ min is the smallest weighting factor of all the fingers. Of course, it is the finger with the highest amplitude input signal $W_{ip}(0)$ to $W_{ip}(N-1)$ which provides the smallest weighting factor.

The calculation of the scaling factors and the approximate division is performed using fixed-point calculations. Upscaling and downscaling operations are used as appropriate for the calculation being performed. Fixed-point operation is advantageous since it requires relatively simple hardware. The scaling factors are provided by the scaling factor calculation device 15 to a scaling device 16, which multiplies each input signal $W_{ip}(0)$ to $W_{ip}(N-1)$ by the appropriate scaling factor to provide weighted and scaled output signals $W_{op}(0)$ to $W_{op}(N-1)$, which are fed to a combiner (not shown).

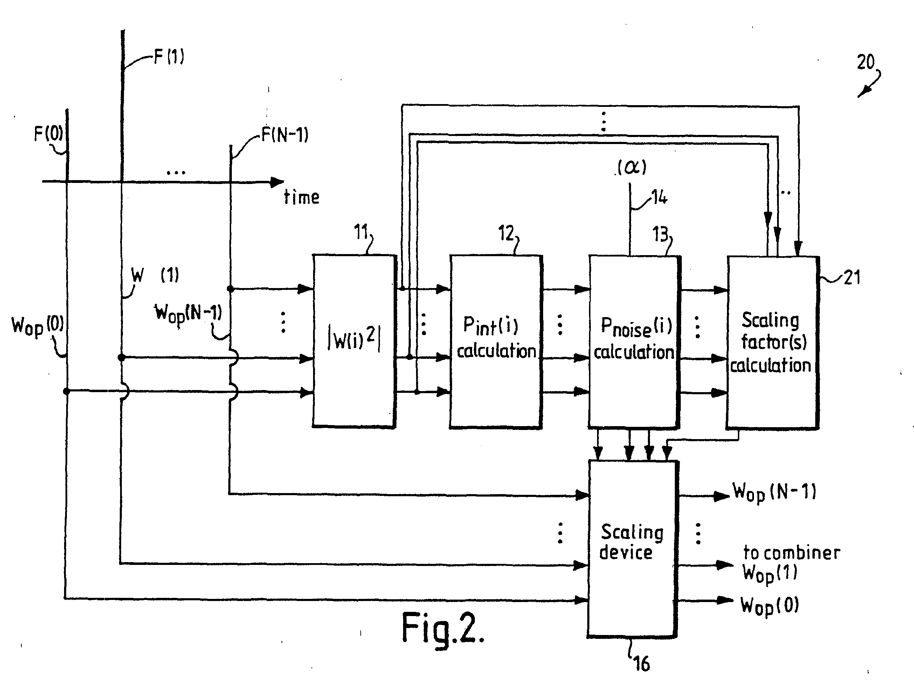

A second embodiment is shown in Figure 2. Referring to Figure 2, apparatus 20 is shown, with reference numerals retained from Figure 1 for like elements. A scaling factor calculation device 21 provides a single scaling factor on an output to the scaling device 16, which also receives all of the weighting signals $P_{noise}(i)$ from the noise power calculation device 13.

The scaling factor calculation device 21 calculates a scaling factor $s$ using the following equation in a floating-point operation:

$$s = \frac{\sum P_{noise}(i)}{\sum |w_{ip}^2(n)|}$$

The scaling device 16 operates on the input signals $W_{ip}(0)$ to $W_{ip}(N-1)$ using the following equation in a floating-point operation:

$$W_{op}(i) = \frac{w_{ip}(i)}{s\sqrt{P_{noise}(i)}}$$

The scaling device 16 therefore provides weighted and scaled output signals $W_{op}(0)$ to $W_{op}(N-1)$, which are then fed to a combiner (not shown).

The apparatus of the second embodiment provides improved performance over the apparatus of the first embodiment, although at the cost of increased hardware and complexity

In one embodiment, the value of $\alpha$ is selected according to a handover condition as shown in Table 1.

Table 1.

| Handover condition | $\alpha$ |
|---|---|
| Non-soft handover | 1 |
| Soft handover | 0.5 |
| No handover | 1 |

In another embodiment, $\alpha$ is fixed at 0.5 or 0.512, regardless of the handover condition Of course, other variations are within the scope of the invention.

**Claims**

1. Apparatus for providing a weighting factor for weighting a signal provided by a given finger of a Rake receiver, the apparatus comprising:

means (11) for measuring the power of signals provided by each of a plurality of fingers of the Rake receiver; means (12) for summing the measured powers on fingers other than the given finger, to provide an estimate of the interference on the given finger; and means (13) for calculating the weighting factor for the given finger from the estimated interference, **characterised in that** the calculating means includes means for calculating the weighting factor with a contribution from the estimated interference on the given finger and a contribution from the sum of the interference estimates of all the fingers divided by the number of the fingers.

2. Apparatus according to claim 1, further comprising means to vary the extent of the contributions in calculating the weighting factor on the basis of a control parameter.

3. Apparatus according to claim 2, further comprising means to provide the control parameter on the basis of a handover condition.

4. A Rake receiver comprising apparatus according to any preceding claim, and means (16) for scaling the signal provided by the given finger.

5. A Rake receiver according to claim 4, wherein the scaling means (10) comprises means for calculating the ratio of the lowest weighting factor to the weighting factor for the given finger, to provide a scaling factor for the given finger.

6. A Rake receiver according to claim 4, wherein the scaling means (10) comprises means for multiplying the signal provided by the given finger by the scaling factor for the given finger.

7. A Rake receiver according to claim 4, wherein the scaling means (10) comprises means for calculating the ratio of the sum of the weighting factors for all the fingers to the sum of the measured powers of the fingers, to provide a scaling factor.

8. A Rake receiver according to claim 7, wherein the scaling means (16) comprises means for multiplying the signal provided by the given finger by the reciprocal of the scaling factor multiplied by the root of the weighting signal for the given finger.

9. A method of providing a weighting factor for a given finger of a Rake receiver, the method comprising:

measuring the power of signals on each of a plurality of fingers;
summing the measured powers on fingers other than the given finger, to estimate the interference on the given finger; and
calculating a weighting factor for the given finger from the estimated interference, **characterised in that**
the weighting factors is calculated with a contribution from the estimated interference on the given finger and a contribution from the sum of the interference estimates of all the fingers divided by the number of the fingers.

10. A method according to claim 9, further comprising varying the extent of the contributions in calculating the weighting factor on the basis of a control parameter.

11. A method according to claim 10, further comprising providing the control parameter on the basis of a handover condition.

12. A method of operating a Rake receiver, the method comprising a method of providing a weighting factor according to any of claims 9 to 11, and scaling the signal provided by the given finger.

13. A method according to claim 12, wherein the scaling step comprises calculating the ratio of the lowest weighting factor of all of the fingers to the weighting factor for the given finger, to provide a scaling factor.

14. A method according to claim 13, wherein the scaling step comprises multiplying the signal provided by the given finger by the scaling factor for the given finger.

15. A method according to claim 13, wherein the scaling step comprises calculating the ratio of the sum of the weighting factors for all the fingers to the sum of the measured powers of all the fingers to provide a scaling factor.

16. A method according to claim 15, wherein the scaling step comprises multiplying the signal provided by the given finger by the reciprocal of the scaling factor multiplied by the root of the weighting factor for the given finger.

**Patentansprüche**

1. Vorrichtung zum Bereitstellen eines Gewichtungsfaktors zum Gewichten eines durch einen vorgegebenen Finger eines Rake-Empfängers bereitgestellten Signals, wobei die Vorrichtung aufweist:

eine Einrichtung (11) zum Messen der Leistung von Signalen, die durch jeden von mehreren Fingern des Rake-Empfängers bereitgestellt werden;
eine Einrichtung (12) zum Summieren der gemessenen Leistungen auf Fingern, die vom vorgegebenen Finger verschieden sind, um einen Schätzwert für die Interferenz auf dem vorgegebenen Finger zu erhalten; und
eine Einrichtung (13) zum Berechnen des Gewichtungsfaktors für den vorgegebenen Finger basierend auf der geschätzten Interferenz;

**dadurch gekennzeichnet, dass**
die Recheneinrichtung eine Einrichtung zum Berechnen des Gewichtungsfaktors aufweist, der einen Beitrag von der geschätzten Interferenz auf dem vorgegebenen Finger und einen Beitrag von der Summe der Interferenz-Schätzwerte aller Finger, geteilt durch die Anzahl der Finger, enthält.

2. Vorrichtung nach Anspruch 1, ferner mit einer Einrichtung zum Ändern des Anteils der Beiträge bei der Berechnung des Gewichtungsfaktors auf der Basis eines Steuerparameters.

3. Vorrichtung nach Anspruch 2, ferner mit einer Einrichtung zum Bereitstellen des Steuerparameters auf der Basis eines Handover-Zustands.

4. Rake-Empfänger mit einer Vorrichtung nach einem der vorangehenden Ansprüche und einer Einrichtung (16) zum Skalieren des durch den vorgegebenen Finger bereitgestellten Signals.

5. Rake-Empfänger nach Anspruch 4, wobei die Skalierungseinrichtung (10) eine Einrichtung zum Berechnen des Verhältnisses zwischen dem niedrigsten Gewichtungsfaktor und dem Gewichtungsfaktor für den vorgegebenen Finger aufweist, um einen Skalierungsfaktor für den vorgegebenen Finger bereitzustellen.

6. Rake-Empfänger nach Anspruch 4, wobei die Skalierungseinrichtung (10) eine Einrichtung zum Multiplizieren des durch den vorgegebenen Finger bereitgestellten Signals mit dem Skalierungsfaktor für den vorgegebenen Finger aufweist.

7. Rake-Empfänger nach Anspruch 4, wobei die Skalierungseinrichtung (10) eine Einrichtung zum Berechnen des Verhältnisses zwischen der Summe der Gewichtungsfaktoren für alle Finger und der Summe der gemessenen Leistungen der Finger aufweist, um einen Skalierungsfaktor bereitzustellen.

8. Rake-Empfänger nach Anspruch 7, wobei die Skalierungseinrichtung (16) eine Einrichtung zum Multiplizieren des durch den vorgegebenen Finger bereitgestellten Signals mit einem Reziprokwert des Skalierungsfaktors, multipliziert mit der Wurzel aus dem Gewichtungsfaktor für den vorgegebenen Finger aufweist.

9. Verfahren zum Bereitstellen eines Gewichtungsfaktors für einen vorgegebenen Finger eines Rake-Empfängers, wobei das Verfahren die Schritte aufweist:

Messen der Leistung von Signalen auf jedem von mehreren Fingern;
Summieren der gemessenen Leistungen auf Fingern, die vom vorgegebenen Finger verschieden sind, zum Schätzen der Interferenz auf dem vorgegebenen Finger; und
Berechnen eines Gewichtungsfaktors für den vorgegebenen Finger von der geschätzten Interferenz;

**dadurch gekennzeichnet, dass**
die Gewichtungsfaktoren mit einem Beitrag von der geschätzten Interferenz auf dem vorgegebenen Finger und einem Beitrag von der Summe der Interferenz-Schätzwerte aller Finger, geteilt durch die Anzahl der Finger, berechnet werden.

10. Verfahren nach Anspruch 9, ferner mit dem Schritt zum Ändern des Anteils der Beiträge bei der Berechnung des Gewichtungsfaktors auf der Basis eines Steuerparameters.

11. Verfahren nach Anspruch 10, ferner mit dem Bereitstellen des Steuerparameters auf der Basis eines Handover-Zustands.

12. Betriebsverfahren für einen Rake-Empfänger, wobei das Verfahren ein Verfahren zum Bereitstellen eines Gewichtungsfaktors nach einem der Ansprüche 9 bis 11 und das Skalieren des durch den vorgegebenen Finger bereitgestellten Signals aufweist.

13. Verfahren nach Anspruch 12, wobei der Skalierungsschritt das Berechnen des Verhältnisses zwischen dem niedrigsten Gewichtungsfaktor aller Finger und dem Gewichtungsfaktor für den vorgegebenen Finger zum Bereitstellen eines Skalierungsfaktors aufweist.

14. Verfahren nach Anspruch 13, wobei der Skalierungsschritt das Multiplizieren des durch den vorgegebenen Finger bereitgestellten Signals mit dem Skalierungsfaktor für den vorgegebenen Finger aufweist.

15. Verfahren nach Anspruch 13, wobei der Skalierungsschritt das Berechnen des Verhältnisses zwischen der Summe der Gewichtungsfaktoren für alle Finger und der Summe der gemessenen Leistungen aller Finger zum Bereitstellen eines Skalierungsfaktors aufweist.

16. Verfahren nach Anspruch 15, wobei der Skalierungsschritt das Multiplizieren des durch den vorgegebenen Finger bereitgestellten Signals mit dem Reziprokwert des Skalierungsfaktors, multipliziert mit der Wurzel aus dem Gewichtungsfaktor für den vorgegebenen Finger aufweist.

**Revendications**

1. Appareil pour l'établissement d'un facteur de pondération destiné à pondérer un signal fourni par un doigt donné d'un récepteur en râteau, l'appareil comprenant :

   des moyens (11) pour mesurer la puissance des signaux fournis par chacun d'une pluralité de doigts du récepteur en râteau ;
   des moyens (12) pour additionner les puissances mesurées sur les doigts autres que le doigt donné, afin de fournir une estimation de l'interférence sur le doigt donné ; et
   des moyens (13) pour calculer le facteur de pondération pour le doigt donné à partir de l'interférence estimée, **caractérisé en ce que** les moyens de calcul comprennent des moyens pour calculer le facteur de pondération avec une contribution de l'interférence estimée sur le doigt donné et une contribution de la somme des estimations d'interférence de tous les doigts divisée par le nombre de doigts.

2. Appareil selon la revendication 1, comprenant en outre des moyens pour faire varier l'importance des contributions pour calculer le facteur de pondération sur la base d'un paramètre de contrôle.

3. Appareil selon la revendication 2, comprenant en outre des moyens pour établir le paramètre de contrôle sur la base d'une condition de transfert intercellulaire.

4. Récepteur en râteau comprenant un appareil selon l'une quelconque des revendications précédentes, et des moyens (16) pour mettre à l'échelle le signal fourni par le doigt donné.

5. Récepteur en râteau selon la revendication 4, dans lequel les moyens de mise à l'échelle (10) comprennent des moyens pour calculer lé rapport du facteur de pondération le plus bas et du facteur de pondération pour le doigt donné, pour établir un facteur de mise à l'échelle pour le doigt donné.

6. Récepteur en râteau selon la revendication 4, dans lequel les moyens de mise à l'échelle (10) comprennent des moyens pour multiplier le signal fourni par le doigt donné par le facteur de mise à l'échelle pour le doigt donné.

7. Récepteur en râteau selon la revendication 4, dans lequel les moyens de mise à l'échelle (10) comprennent des moyens pour calculer le rapport de la somme des facteurs de pondération pour tous les doigts et de la somme des puissances mesurées des doigts, pour établir un facteur de mise à l'échelle.

8. Récepteur en râteau selon la revendication 7, dans lequel les moyens de mise à l'échelle (16) comprennent des moyens pour multiplier le signal fourni par le doigt donné par l'inverseur du facteur de mise à l'échelle multiplié par la racine du signal de pondération pour le doigt donné.

9. Procédé pour l'établissement d'un facteur de pondération pour un doigt donné d'un récepteur en râteau, le procédé consistant à :

   mesurer la puissance des signaux sur chacun d'une pluralité de doigts ;
   additionner les puissances mesurées sur des doigts autres que le doigt donné, afin d'estimer l'interférence sur le doigt donné ; et
   calculer un facteur de pondération pour le doigt donné à partir de l'interférence estimée, **caractérisé en ce que**

   les facteurs de pondération sont calculés avec une contribution de l'interférence estimée sur le doigt donné et une contribution de la somme des estimations d'interférence de tous les doigts divisée par le nombre de doigts.

10. Procédé selon la revendication 9, consistant en outre à faire varier l'importance des contributions pour calculer le facteur de pondération sur la base d'un paramètre de contrôle.

11. Procédé selon la revendication 10, consistant en outre à établir le paramètre de contrôle sur la base d'une condition de transfert intercellulaire.

12. Procédé de fonctionnement d'un récepteur en râteau, le procédé comprenant un procédé d'établissement d'un facteur de pondération selon l'une quelconque des revendications 9 à 11, et la mise à l'échelle du signal fourni par le doigt donné.

**13.** Procédé selon la revendication 12, dans lequel l'étape de mise à l'échelle consiste à calculer le rapport du facteur de pondération le plus bas de tous les doigts et du facteur de pondération pour le doigt donné, pour établir un facteur de mise à l'échelle.

**14.** Procédé selon la revendication 13, dans lequel l'étape de mise à l'échelle consiste à multiplier le signal fourni par le doigt donné par le facteur de mise à l'échelle pour le doigt donné.

**15.** Procédé selon la revendication 13, dans lequel l'étape de mise à l'échelle consiste à calculer le rapport de la somme des facteurs de pondération pour tous les doigts et de la somme des puissances mesurées de tous les doigts pour établir un facteur de mise à l'échelle.

**16.** Procédé selon la revendication 15, dans lequel l'étape de mise à l'échelle consiste à multiplier le signal fourni par le doigt donné par l'inverse du facteur de mise à l'échelle multiplié par la racine du facteur de pondération pour le doigt donné.

Fig.1.

EP 1 374 435 B1

Fig.2.

EP 1 374 435 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0893888 A
- US 5812542 A